(19) Europäisches Patentamt
European Patent Office
Office européen des brevets

(11) **EP 2 405 602 A1**

(12) **EUROPEAN PATENT APPLICATION**

(43) Date of publication:
**11.01.2012 Bulletin 2012/02**

(51) Int Cl.:
***H04L 9/08*** (2006.01)

(21) Application number: **10305735.2**

(22) Date of filing: **05.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Thomson Licensing**
**92130 Issy-les-Moulineaux (FR)**

(72) Inventor: **Karroumi, Mohamed**
**92443, Issy-Les-Moulineaux (FR)**

(74) Representative: **Ruellan-Lemonnier, Brigitte**
**Technicolor**
**European Patent Operations**
**1-5 Rue Jeanne d'Arc**
**92443 Issy-les-Moulineaux Cedex (FR)**

(54) **Method, device and computer program product for node indexation in a hierarchical tree**

(57) A method of indexing nodes in a tree, the method being particularly suited to generated input to a Subset Difference Cover Finding algorithm. Some nodes, e.g. revoked users, belong to an ordered set. For these nodes, a processor (410): calculates the least common ancestor node for the node and the next node in the ordered set; adds the node to the indexing sets of the least common ancestor node and the nodes that are hierarchically superior to the least common ancestor node, wherein the node is added to an indexing set only if it is not already present therein; adds the next node to the indexing sets of the least common ancestor node and the nodes that are hierarchically superior to the least common ancestor node; and, if the number of nodes in one or more indexing sets became two when the node or the next node was added, adds the hierarchically lowest node corresponding to these indexing sets to a selection set. Also provided are an apparatus (400) and a computer program product (460).

Figure 3

**Description**

TECHNICAL FIELD

The present invention relates generally to data processing and in particular to the subset difference algorithms.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The Advanced Access Content System (AACS) is used to protect, for example, Blu-ray discs. See for example Advanced Access Content System Introduction and Common Cryptographic Elements, v0.91, February 17, 2006, Intel Corporation, International Business Machines Corporation, Matsushita Electric, Industrial Co., Ltd., Microsoft Corporation, Sony Corporation, Toshiba Corporation, The Walt Disney Company, and Warner Bros.

The AACS system is based on a broadcast encryption technique called Subset Difference (SD) introduced in D. Naor, M. Naor and J. Lotspiech, Revocation and Tracing Schemes for Stateless Receivers; in Proceedings of Crypto'01, volume 2139 of Lecture Notes in Computer Science, pages 41-62, 2001.

The idea of broadcast encryption is to put users into a plurality of overlapping groups. A secret key is assigned to each group and each user has access only to the secret keys of the groups it belongs to. An advantage of the method is that content is encrypted only once using the key of the large group containing all authorized users.

In the SD method, users are organized in a binary tree wherein each user is a leaf. The subsets of authorized users are represented by differences of two subsets such that subset $i$ covers a set of users and subset $j$ excludes the revoked users in subset $i$.

To obtain all the differences necessary to cover all authorized users in a tree, a sender has to execute a Cover Finding (CF) algorithm, such as the one described in the previously mentioned paper Naor, Naor and Lotspiech. This basic algorithm tests all possible combinations of revoked users, which takes $O(r^3)$ time where r is the number of revoked users.

Another algorithm is proposed in Y. Nakamura, H. Kikuchi, Efficient Key Management Based on the Subset Difference Method for Secure Group Communication; in International Conference on Advanced Information Networking and Applications (AINA'05), vol. 1, pages 707-712, 2005. By introducing a technique for indexing nodes, the algorithm reduces the cost up to O(r.log(r).log(n)) at the expense of increased memory space. The amount of storage needed is $O(d.r)$, where $d$ is the depth of tree.

While they work well, it will be appreciated that it is almost always desired to improve the existing algorithms. The present invention provides such an improvement, notably a subset difference algorithm that reduces storage requirements.

Before presenting the invention, the previously mentioned prior art algorithms will be presented in detail.

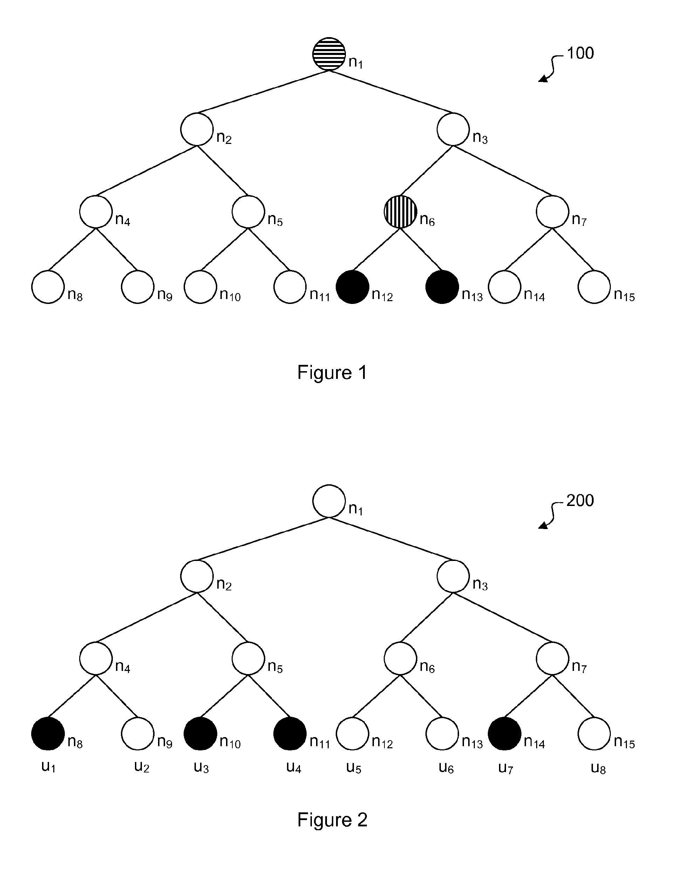

Figure 1 illustrates an exemplary binary tree 100 with a number of nodes, $n_1$-$n_{15}$ and $n$ leaves ($n$=8) that correspond to users (or players). The binary tree 100 comprises two revoked users $n_{12}$ and $n_{13}$. Each SD group $S_{i,j}$ is the difference of two subsets represented by two nodes $n_i$ and $n_j$ in the tree; in other words $S_{i,j}$ represents the users that have node $n_i$ as an ancestor but not node $n_j$ ($i$ must be an ancestor of $j$). In the exemplary binary tree 100, node $n_i$ is node $n_1$ (i.e. the ancestor of all the users) and node $n_j$ is node $n_6$; SD group $S_{1,6}$ is thus the difference between the users having node $n_1$ as an ancestor but not node $n_6$, or, to put it another way, all the non-revoked (i.e. authorized) users in the binary tree 100.

For each internal node in the binary tree, a random 'seed' is generated. The seed is only known by an administrator and permits to derive the keys of all the groups. The seeds are derived using a one-way function $H$ and the resulting output is called a '*label*'. Each group $S_{i,j}$ has a corresponding $Label_{i,j}$ and the private key $K_{i,j}$ associated with $S_{i,j}$ is defined by $K_{i,j} = HM(Label_{i,j})$. $H$ takes $n$ bits as input and outputs $3*n$ bits, and $H_M$ represents the middle $n$-bit part of the output. The number of ciphertexts required to broadcast to all authorized users is the number of groups $S_{i,j}$ that together contain the users.

The first step in constructing the collection of groups $S_{i,j}$ consists in finding two revoked leaves $n_i$ and $n_j$ in the tree having a least common ancestor $n_{lca(i,j)}$ that does not contain another revoked leaf. Once this couple is found, the following algorithm outputs corresponding sets $S_{i,j}$ (at most two):

    i. Let $n_\alpha$ and $n_\beta$ be the two direct child nodes of $n_{lca(i,j)}$, such that nodes $n_i$, $n_j$ are descendant of $n_\alpha$ and $n_\beta$ respectively.
    ii. If $n_\alpha \neq n_i$ add the subset $S_{\alpha i}$ to the collection

iii. If $n_\beta \neq n_j$ add $S_{\beta j}$ to the collection

iv. Else no set is added

This algorithm is the initially proposed Cover Finding (CF) algorithm.

The algorithm proposed by Nakamura and Kikuchi finds all necessary subsets $S_{i1,j1}$, $S_{i2,j2}$,..., $S_{im,jm}$ that cover all authorized users. The algorithm encompasses the difficulty of choosing two leaves $n_i$ and $n_j$ in the tree having a least common ancestor that does not contain another revoked leaf.

This algorithm performs well regarding the processing time. The main drawback is however the memory space required. The amount of storage needed is about $d.r$ where $d$ is the depth of tree. For a system like AACS, the memory space will be about 12 MB for 100 000 revocations. This storage space is mainly required in Step 1 of the algorithm, which indexes all nodes in the path from a revoked leaf to the root.

SUMMARY OF INVENTION

In a first aspect, the invention is directed to a method of indexation of a plurality of nodes within a tree comprising nodes belonging to a group of nodes. A first node and a second node are selected among the group of nodes; a common ancestor node for the first node and the second node is calculated, the common ancestor node and its hierarchically superior nodes each having an indexing set; the first node is added to the indexing sets of the common ancestor node and its hierarchically superior nodes, wherein the first node is added to an indexing set only if it is not already present therein; the second node is added to the indexing sets of the common ancestor node and its hierarchically superior nodes; if the number of nodes in one or more indexing sets became two when the node or the second node was added, the nodes corresponding to these indexing sets are added to a selection set. This is repeated, while at least one node in the group of nodes has not been selected as the first node or the second node, with the second node of the previous iteration set as the first node and the second node selected as a node in the group of nodes that has not already been selected as the second node

In a first preferred embodiment, the tree is a binary tree.

In a second preferred embodiment, the set of nodes is an ordered set of nodes and the order is from one end of the tree to the other. It is advantageous that the nodes that belong to the ordered set are leaves in the tree.

In a third preferred embodiment, the common ancestor node is the least common ancestor node.

In a fourth preferred embodiment, the tree is split into a plurality of hierarchic layers, the node is only added to the indexing sets of nodes in the same hierarchical layer, and the next node is only added to the indexing sets of nodes in the same hierarchical layer.

In a fifth preferred embodiment, the indexing sets and the selection set are used in a Subset Difference cover finding algorithm.

In a sixth preferred embodiment, only the hierarchically lowest node corresponding to the indexing sets for which the nodes became two is added to the selection set during an iteration.

In a second aspect, the invention is directed to an apparatus for indexation of a plurality of nodes within a tree comprising nodes belonging to a group of nodes. The apparatus comprises a processor programmed to iteratively: select a first node and a second node among the group of nodes; calculate a common ancestor node for the first node and the second node, the common ancestor node and its hierarchically superior nodes each having an indexing set; add the first node to the indexing sets of the common ancestor node and its hierarchically superior nodes , wherein the first node is added to an indexing set only if it is not already present therein; add the second node to the indexing sets of the common ancestor node and its hierarchically superior nodes; and if the number of nodes in one or more indexing sets became two when the node or the second node was added, add the nodes corresponding to these indexing sets to a selection set.

In a first preferred embodiment, the tree is split into a plurality of hierarchic layers and wherein the processor is further programmed to add the node only to the indexing sets of nodes of the same hierarchical layer, and to add the next node only to the indexing sets of nodes of the same hierarchical layer.

In a second preferred embodiment, the processor is further programmed to use the indexing sets and the selection set in a Subset Difference cover finding algorithm.

In a third aspect, the invention is directed to a computer program product storing thereon instructions that, when executed on a processor, performs the method of any one of the embodiments of the first aspect of the invention.

BRIEF DESCRIPTION OF DRAWINGS

Preferred features of the present invention will now be described, by way of non-limiting example, with reference to the accompanying drawings, in which

Figure 1 illustrates an exemplary binary tree with leafs corresponding to users;

Figure 2 illustrates an exemplary binary tree which used as input to the algorithm of the first preferred embodiment of the present invention;

Figure 3 illustrates an exemplary binary tree which used as input to the algorithm of the second preferred embodiment of the present invention; and

Figure 4 illustrates an exemplary computing device on which the algorithms of the present invention may be implemented.

DESCRIPTION OF EMBODIMENTS

Step 1 of Nakamura and Kikuchi's algorithm creates many node sets $L_i$ that contains only one node. These sets are useless as they are never taken as input for the CF algorithm. Furthermore, it indexes leafs for nodes that are not used immediately afterward (Indexation here means that each node that is not a leaf receives the list of revoked leaves it contains.)

The indexation process for a Cover Finding algorithm of the present invention proposes two improvements:

1 To index only useful nodes in the path from a revoked leaf to the root. This is based on computing the least common ancestor node of two revoked leaves.

2 To split the binary tree into (at least) two parts and index the parts separately: first, leaves for nodes that are in the low-level of the tree are indexed the CF algorithm is run. Then the high-level nodes are indexed and the CF algorithm is performed again.

First Preferred Embodiment

In the first preferred embodiment, the revoked leafs are indexed by taking them by pairs. Each pair is indexed on intermediates nodes beginning from their least common ancestor in the path to the root.

Let $R$ be the set of revoked users and $|R| = r$. Revoked leaves are ordered, preferably from the left to the right of the binary tree, but for example right-to-left may also be envisaged. The depth of the tree is $u$ and the tree comprises $2^u$ users. The total number of revoked nodes in a Steiner tree (i.e. the minimal tree that comprises all the revoked leaves and the root) is at most $r.u$.

**Step 1:** For each $r_i \in R$, compute the least common ancestor (lca) with the next succeeding $r_j \in R$, i.e. $n_{lca(i,j)}$ = $lca$ ($R[i]$, $R[i+1]$) = $lca$ ($r_i$, $r_j$). Consider indexation sets $IS_x$, $IS_{x-1}$,..., $IS_1$ corresponding to intermediate nodes in the path from $n_{lca(i,j)}$ to the root (sets $L_i$ are associated to nodes, which are not leaves, in the Steiner tree). Add $r_i$ and $r_j$ to every node set of $IS_x$, $IS_{x-1}$,..., $IS_1$. If leaf $r_i$ is already in a set $IS$, add only $r_j$. During the process of adding revoked leaves, when a set $IS_k$ satisfies $|IS_k| = 2$ for the first time for a given pair of nodes (nodes are scanned from bottom to top), the corresponding node $n_k$ is added to a temporary selection set denoted $B$. (It should be noted that, while less efficient, it is possible to add more than the lowest node.)

**Step 2:** Selection set $B$ contains $m$ nodes $n^{(1)}_x$,...,$n^{(m)}_x$ that, without loss of generality, are renumbered as $n_1$,..., $n_m$. Nodes are removed from $B$ going from the right to the left, i.e. $n_m$,...,$n_1$. For each element $n_y$, (with $y$ belongs to $\{m,..., 1\}$) removed from $B$, the CF algorithm is applied if $|IS_x| \neq 1$:

i. Let $n_\alpha$ and $n_\beta$ be the two children of $n_y$, such that the nodes in $IS_y = \{n_i, n_j\}$ are descendants of $n_\alpha$ and $n_\beta$ respectively.
ii. If $n_\alpha \neq n_i$, add the subset $S_{\alpha i}$ to the collection
iii. If $n_\beta \neq n_j$, add the subset $S_{\beta j}$ to the collection

**Step 3:** For all sets $IS_k$, $IS_{k-1}$,..., $IS_1$ (scanned from bottom to top), substitute all $n_i$ and $n_j$ with node $n_y$. This removes all the descendants of the node and makes $n_y$ a revoked leaf. If during the substitution process $|IS_j| = 2$ for a given $j$ in $\{k,..., 1\}$, then corresponding node $n_j$ is put onto $B$ if not already present.

**Step 4:** Repeat Steps 2 and 3 until there is no element in $B$. When the last element $n_y$ is other than root $n_1$, output subset $S_{1,y}$.

Illustrative example of the first preferred embodiment

Figure 2 illustrates an exemplary binary tree 200 which will be used as input to the algorithm of the first preferred embodiment of the present invention. The binary tree 200 has depth 3 and comprises $2^3=8$ users $u_1$-$u_8$ corresponding to nodes $n_8$-$n_{15}$, of which users $u_1$, $u_3$, $u_4$, and $u_7$ have been revoked. Put another way R = $\{u_1, u_3, u_4, u_7\}$ = $\{n_8, n_{10}, n_{11}, n_{14}\}$ = $\{r_8, r_{10}, r_{11}, r_{14}\}$.

**Step 1**

$$Ica(r_8, r_{10}) = n_2$$

Add $r_8$, $r_{10}$ to node sets $IS_2$ and $IS_1$.
$|IS_2| = 2$ for the first time ($|IS_1| = 2$ also happens, but after $IS_2$) therefore $n_2$ is put in $B$.

$$IS_1 = \{r_8, r_{10}\}, \; IS_2 = \{r_8, r_{10}\} \text{ and } B = \{n_2\}$$

$$Ica(r_{10}, r_{11}) = n_5$$

Add $r_{10}$, $r_{11}$ to node set $IS_5$ and $r_{11}$ only to node sets $IS_2$ and $IS_1$. $|IS_5| = 2$ for the first time, so $n_5$ is put in $B$.

$$IS_1 = \{r_8, r_{10}, r_{11}\}, \; IS_2 = \{r_8, r_{10}, r_{11}\}, \; IS_5 = \{r_{10}, r_{11}\} \text{ and } B = \{n_2, n_5\}$$

$$Ica(r_{11}, r_{14}) = n_1$$

Add $r_{14}$ (but not $r_{11}$) to node set $IS_1$.

$$IS_1 = \{r_8, r_{10}, r_{11}, r_{14}\}, \; IS_2 = \{r_8, r_{10}, r_{11}\}, \; IS_5 = \{r_{10}, r_{11}\} \text{ and } B = \{n_2, n_5\}$$

**Step 2**

Cover finding is applied to $n_5$ as $|IS_x| = 2 \neq 1$.
The two children of $n_5$ are $n_{10}$ and $n_{11}$, but the conditions are not satisfied as the direct children of $n_5$ are leaves, i.e. $n_\alpha = n_i$, and $n_\beta = n_j$. No set is output.

**Step 3**

$n_5$ becomes a revoked leaf $r_5$ $\{r_{10}, r_{11}\}$ is substituted by $r_5$ in $IS_5$, $IS_2$ and $IS_1$.

$IS_1 = \{r_8, r_5, r_{14}\}, \; IS_2 = \{r_8, r_5\}, \; IS_5 = \{r_5\}. \; |IS_2| = 2, \; n_2$ is already in $B = \{n_2\}$.

**Step 4: While B is not empty, steps 2 and 3 are repeated.**

**Step 2**

Cover finding is applied to $n_2$ as $|IS_2| = 2 \neq 1$. $IS_2 = \{r_8, r_5\}$
The two children of $n_2$ are $n_\alpha = n_4$ and $n_\beta = n_5$.
$n_\alpha = n_4 \neq r_8$, so the condition is satisfied for the left child of $n_2$: $S_{4,8}$ is the first subset added to the collection.
$n_\beta = n_5 = r_5$. so the condition is not satisfied for the right child of $n_2$: no subset is added to the collection.

**Step 3**

$n_2$ becomes a revoked leaf $r_2$.

$\{r_8, r_5\}$ is substituted by $r_2$ in $IS_2$ and $IS_1$.

$IS_1 = \{r_2, r_{14}\}$, $IS_2 = \{r_2\}$, $IS_5 = \{r_5\}$ and since $|IS_1| = 2$, $n_1$ is put in B $= \{n_1\}$.

As already mentioned, this is repeated until there is no element left in *B*.

**Step 2**

Cover finding is applied to $n_1$ as $|I/S_1| = 2 \neq 1$. $IS_1 = \{r_2, r_{14}\}$.

The two children of $n_1$ are $n_\alpha = n_2$ and $n_\beta = n_3$.

$n_\alpha = n_2 = r_2$, so the condition is not satisfied for the left child of $n_1$: no subset is added to the collection.

$n_\beta = n_3 \neq r_{14}$, so the condition is satisfied for the right child of $n_1$: $S_{3,14}$ is the second subset added to the collection.

The algorithm then ends, as *B* is empty.

Subsets $\{S_{4,8}; S_{3,14}\}$ are obtained as the output of the algorithm. In this example, three nodes $\{n_3, n_4, n_7\}$ were not used in the indexing process. (This is in contrast to Nakamura and Kikuchi's algorithm in which each contains one revoked leaf.) This enables a saving of the space required for storing three integers in the memory. The applicant has found that on the average 50 % of the memory space may be saved using the algorithm of the first preferred embodiment of the present invention.

Second Preferred Embodiment

During indexation, higher level nodes are put in the selection set B (and therefore used as input in cover finding algorithm) at the very end of the algorithm execution. Hence, indexation for the higher level nodes is costly in terms of memory space. In the second preferred embodiment, high level nodes are not indexed at the beginning of the algorithm.

To do so, the tree is split in two parts and two separate indexation steps are performed. The tree is split according to its height, which is chosen so that indexation for each part uses approximately the same memory space. Experimental results have shown that when about 1% of total number of users are revoked, half of the memory is used by the nodes that are at a depth level of at most sqrt(log($n$)) from the root (including the root). If $n = 2^u$ and $s = $ sqrt($u$), then high-level nodes are nodes in the range $\{1,..., 2^s\text{-}1\}$ and low-level nodes in the range $\{2^s,..., 2^u\text{-}1\}$ (where $n$ is the total number of users).

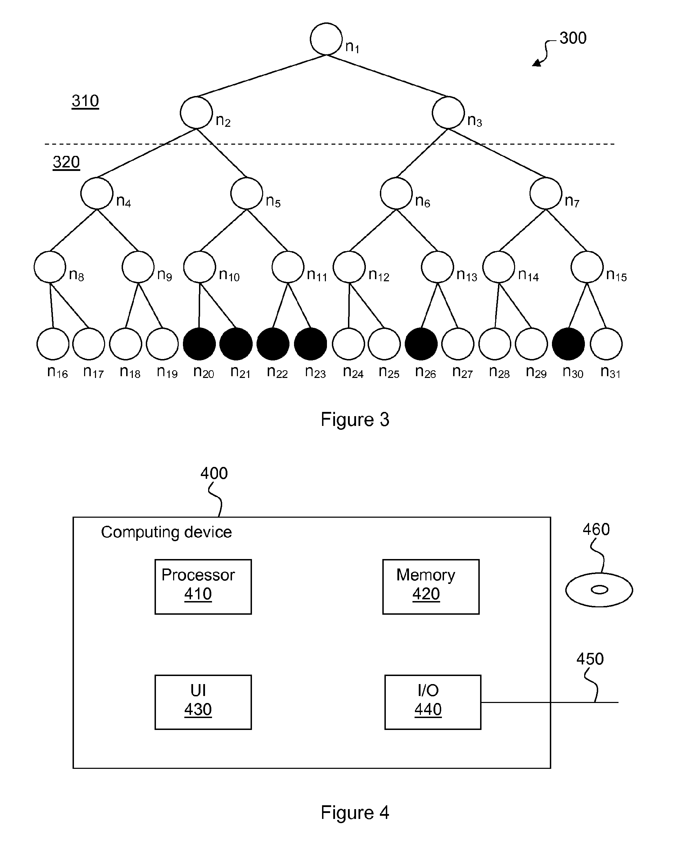

For a tree containing 16 users, sqrt(log($n$)) = sqrt(log($2^4$)) = sqrt($4$) = 2 (rounded up), so the tree is split with nodes $n_1$-$n_3$ as high-level nodes and $n_4$-$n_{31}$ as low-level nodes. This is illustrated in Figure 3, wherein the binary tree 300 is divided into high-level nodes 310 and low-level nodes 320.

As before, the revoked leafs are indexed by pairs beginning from their least common ancestor in the path to the root. Let $s = $ sqrt(log($n$)), if $n = 2^u$ then $s = $ sqrt($u$); and $S$ is the set of groups $S_{i,j}$ containing all authorized users.

**Step1: Leaf indexation for low-level nodes.**

For each $r_i \in R$, the least common ancestor (lca) with the next succeeding $r_j \in R$ is computed, i.e. $n_{lca(i,j)} = lca(R[i], R[i+1]) = lca(r_i, r_j)$. The indexation sets $IS_x$, $IS_{x-1},..., IS_z$ correspond to intermediate nodes in the path from $n_x = n_{lca(i,j)}$ to the highest node $n_z$ such that $n_z >= 2^s$. $r_i$ and $r_j$ are added to every node set of $IS_x$, $IS_{x-1},..., IS_z$. If leaf $r_i$ is already in a set $IS$, only $r_j$ is added. As in the first preferred embodiment, when a set $IS_k$ satisfies $|IS_k| = 2$ for the first time (nodes are scanned from bottom to top), the corresponding node $n_k$ is added to a temporary selection set $B$, although only the lowest node is added to selection set $B$.

**Step 2**

Stack B contains $m$-$p$ nodes $n_1,..., n_{m-p}$. Nodes are removed from $B$ from the right to the left, i.e. $n_{m-p},..., n_1$. For each element $n_y$ (with $y$ in $\{m,..,1\}$) removed from $B$, the cover finding algorithm is applied if $|IS_x| \neq 1$:

i. Let $n_\alpha$ and $n_\beta$ be the two children of $n_y$, such that the nodes in $IS_y = \{n_i, n_j\}$ are descendants of $n_\alpha$ and $n_\beta$ respectively.

ii. If $n_\alpha \neq n_i$, add the subset $S_{\alpha i}$ to the collection

iii. If $n_\beta \neq n_j$, add $S_{\beta j}$ to the collection

**Step 3**

For all sets $IS_k$, $IS_{k-1},..., IS_z$ (scanned from bottom to top), $n_i$ and $n_j$ are substituted by node $n_y$, which removes all the descendants of the node and makes $n_y$ a revoked leaf. The same substitutions are done in the revoked set $R$, i.e $r_i$ and $r_j$ are substituted by node $r_y$.

If, during the substitution process, $|IS_j| = 2$ for a given $j$ in $\{k,..., 1\}$, then corresponding node $n_j$ is put onto $B$, if not already present.

**Step 4**

Steps 2 and 3 are repeated until $B$ is empty.

If $R'$, i.e. the set of revoked nodes at the end of 'low-level' algorithm, contains only one node $r_y$, then subset $S_{1,y}$ is added to the collection $S$ and the algorithm ends. Else $S'$ (containing the partial collection of subsets $S_{i,j}$) is ouput and $R'$ is the updated set of revoked leaves, selection set $B$ and all indexation sets $IS_x, IS_{x-1},..., IS_z$ are flushed from memory and the algorithm moves to **Step 5**.

**Step 5: Leaf indexation for high-level nodes**

For each $r_i \in R$, the least common ancestor (lca) with the next succeeding $r_j \in R$ is computed, i.e. $n_{lca(i,j)} = lca(R[i], R[i+1]) = lca(r_i, r_j)$. $r_i$ and $r_j$ are added to each node set of $IS_z, IS_{z-1},..., IS_1$ that corresponds to an intermediate node in the path from least common ancestor $n_z = n_{lca(i,j)}$ to the root (note that $n_z$ necessarily is less than or equal to $2^s-1$). If leaf $r_i$ is already in a set $IS$, only $r_j$ is added. During the process of adding revoked leaves, when a set $IS_z$ satisfies $|IS_z| = 2$ for the first time, the corresponding node $n_z$ is added to a selection set $B$.

**Step 6**

Stack B contains p nodes $n_1,...,np$. These nodes are removed from $B$ from the right to the left, i.e. $n_p,...,n_1$. For each element $n_y$ (with $y$ in $\{m,..,1\}$) removed from $B$, the cover finding algorithm is applied if $|IS_x| \neq 1$:

    i. $n_\alpha$ and $n_\beta$ are the two children of $n_y$, such that nodes in $IS_y = \{n_i, n_j\}$ are descendants of $n_\alpha$ and $n_\beta$ respectively.
    ii. If $n_\alpha \neq n_i$ add the subset $S_{\alpha i}$ to the collection
    iii. If $n_\beta \neq n_j$ add $S_{\beta j}$ to the collection

**Step 7**

For all sets $IS_z, IS_{z-1},..., IS_1$ (scanned from bottom to top), $n_i$ and $n_j$ is substituted by node $n_y$. If during the substitution process $|IS_j| = 2$ for a given $j$ in $\{k,...,1\}$, corresponding node $n_j$ is put onto $B$ if not already present.

**Step 8**

Steps 6 and 7 are repeated until there $B$ is empty. When the last element $n_y$ of $B$ is other than root $n_1$, subset $S_{1,y}$ is added to the collection $S$. Finally, $S$ containing all subsets $S_{i,j}$ is output.

<u>Illustrative example of the second preferred embodiment</u>

The exemplary binary tree 300 in Figure 3 will also be used as input to the algorithm of the second preferred embodiment of the present invention. The binary tree 300 has depth 4 and comprises $2^4$=16 users corresponding to nodes $n_{16}$-$n_{31}$, of which users of nodes $n_{20}, n_{21}, n_{22}, n_{23}, n_{26}$, and $n_{30}$ have been revoked. Put another way, R = $\{r_{20}, r_{21}, r_{22}, r_{23}, r_{26}, r_{30}\}$.

**Step 1**

$$lca(r_{20}, r_{21}) = n_{10}$$

$r_{20}, r_{21}$ are added to node sets $IS_{10}$ and $IS_5$. $|IS_{10}| = 2$ for the first time, $n_{10}$ is put in $B$ (but $n_5$ is not).

$$IS_{10} = \{r_{20}, r_{21}\}, IS_5 = \{r_{20}, r_{21}\}, B = \{n_{10}\}$$

$$lca(r_{21}, r_{22}) = n_5$$

$r_{22}$ is added to node set $IS_5$. No node is added to $B$.

$$IS_{10} = \{r_{20}, r_{21}\}, IS_5 = \{r_{20}, r_{21}, r_{22}\}, B = \{n_{10}\}$$

$$lca(r_{22}, r_{23}) = n_{11}$$

$r_{22}$, $r_{23}$ are added to node set $IS_{11}$ and $r_{23}$ to node set $IS_5$. $|IS_{11}| = 2$ for the first time, $n_{11}$ is put in $B$.

$$IS_{11} = \{r_{22}, r_{23}\}, IS_{10} = \{r_{20}, r_{21}\}, IS_5 = \{r_{20}, r_{21}, r_{22}, r_{23}\}, B = \{n_{10}, n_{11}\}$$

$lca(r_{23}, r_{26})$ and $lca(r_{26}, r_{30})$ are outside of the low-level nodes, so no indexation is performed.
Thus, at the end of step 1: $IS_5 = \{r_{20}, r_{21}, r_{22}, r_{23}\}$, $IS_{10} = \{r_{20}, r_{21}\}$, $IS_{11} = \{r_{22}, r_{23}\}$ and $B = \{n_{10}, n_{11}\}$.

**Step 2**

The cover finding is applied to $n_{11}$. The conditions are not satisfied as direct children of $n_{11}$ are revoked leaves. No set is added to $S$.

**Step 3**

$n_{11}$ becomes a revoked leaf $r_{11}$.
$\{r_{22}, r_{23}\}$ are substituted by $r_{11}$ in $IS_5$, $IS_{11}$ and $R$

$$IS_5 = \{r_{20}, r_{21}, r_{11}\}, IS_{11} = \{r_{11}\}, R = \{r_{20}, r_{21}, r_{11}, r_{26}, r_{30}\}, B = \{n_{10}\}$$

**Step 4: While B is not empty step 2 and 3 are repeated.**

**Step 2**

The cover finding is applied to $n_{10}$.
The conditions are not satisfied as the direct children of $n_{10}$ are revoked leaves. No set is added to $S$.

**Step 3**

$n_{10}$ becomes a revoked leaf $r_{10}$.
$\{r_{20}, r_{21}\}$ are substituted by $r_{10}$ in $IS_5$, $IS_{10}$ and $R$.

$$IS_5 = \{r_{10}, r_{11}\}, IS_{10} = \{r_{10}\}, R = \{r_{10}, r_{11}, r_{26}, r_{30}\}.$$

Since $|IS_5| = 2$, $n_5$ is put in $B = \{n_5\}$

**Step 2**

The cover finding is applied to $n_5$.

The conditions are not satisfied as direct children of $n_5$ are revoked leaves. No set is added to $S$.

**Step 3**

$n_5$ becomes a revoked leaf $r_5$.
$\{r_{10}, r_{11}\}$ are substituted by $r_5$ in $IS_5$ and $R$.
$IS_5 = \{r_5\}$ and $R = \{r_5, r_{26}, r_{30}\}$ and $B$ is empty.
$S' = \{\}$ (i.e. $S'$ is empty) is output as well as $R' = \{r_5, r_{26}, r_{30}\}$, the updated set of revoked leaves.

**Step 5**

$R' = \{r_5, r_{26}, r_{30}\}$ contains more than one node.

$$lca(r_5, r_{26}) = n_1.$$

$r_5, r_{26}$ are added to node set $IS_1$. $|IS_1| = 2$ for the first time, $n_1$ is put in B

$$IS_1 = \{r_5, r_{26}\}, B = \{n_1\}$$

$$lca(r_{26}, r_{30}) = n_3.$$

$r_{26}, r_{30}$ are added to node set $IS_3$ and $r_{30}$ is added to node set $IS_1$. $|IS_3| = 2$, so $n_3$ is put in $B$.

$$IS_1 = \{r_5, r_{26,} r_{30}\}, IS_3 = \{r_{26,} r_{30}\}, B = \{n_1, n_3\}$$

**Step 6**

The cover finding is applied to $n_3$.
The condition is satisfied for both the right and the left child nodes. $S_{6,26}$ and $S_{7,30}$ are the first subsets added to the collection $S' = \{S_{6,26}; S_{7,30}\}$.

**Step 7**

$n_3$ becomes a revoked leaf $r$,
$\{r_{26}, r_{30}\}$ are substituted by $r_3$ in $IS_3$, $IS_1$.
$IS_1 = \{r_5, r_3\}, IS_3 = \{r_3\}$. $|IS_1| = 2$ but $n_1$ is already in $B = \{n_1\}$.

**Step 8: While B is not empty step 6 and 7 are repeated.**

**Step 6**

The cover finding is applied to $n_1$.
The condition is satisfied for the left node. $S_{1,5}$ is added to the collection S.

**Step 7**

$B$ is empty.
$S = \{S_{6,26}; S_{7,30}; S_{1,5}\}$ is output.
In this example, the three high-level nodes $n_1$, $n_2$ and $n_3$ were not used in the first step of indexation. This saved the memory space for storing 16 integers. The indexation in the first step used only the sets $IS_5$, $IS_{10}$ and $IS_{11}$,



which in terms of storage represents 8 integers. For the second indexation only used $IS_3$ and $IS_1$ were used, which represents storage of 5 integers. Storage for 8 integers is thus needed during the execution of whole algorithm. The basic prior art algorithm requires storing 24 integers; the algorithm of the second preferred embodiment of the present invention thus saves 2/3 of the memory space. When taking random leaves in a higher tree, the amount of saved memory space is roughly the same, i.e. about 2/3 of the space needed in Nakamura and Kikuchi's algorithm.

Generalization

The algorithm of the second preferred embodiment may be generalized by splitting the binary tree into n parts (or *n* layers) where *n* is greater than 2. Except for the lowest level layer of the tree, the depth of a layer of the tree is preferably sqrt(log(*n*)). In other words, the layer going from the root are equally spaced at a distance sqrt(log(*n*)), except for the last layer. A layer *k* is at a level $k \cdot$sqrt(log(*n*)) where *k* is in [*1,2,..,sqrt(log(n))*]. The interval depends on the number of splits (maximum number of splits is advantageously less than or equal to sqrt(log(*n*))). The indexation process may then be done separately and iteratively for each level, beginning from the lowest level layer of the tree until reaching the top layer.

For a tree containing 64 users then sqrt(log(*n*)) = sqrt(log($2^6$)) = sqrt(6) = 2, resulting in three parts that each comprises two levels. The first layer nodes are nodes in the range $\{1,..., 2^2\text{-}1\}$, the second layer nodes in $\{2^2,..., 2^4\text{-}1\}$, and the third layer comprises the nodes in $\{2^4,..., 2^6\text{-}1\}$.

Without going into details, the algorithm comprises running the algorithm of the second preferred embodiment from Step 1 until Step 4 k-1 times (when the tree is split in *k* layers): once for the lowest layer, once for the lowest but one layer, and so on. The algorithm is repeated until the second layer is treated. Finally, the algorithm is executed from Step 5 to Step 8 for the first layer.

For instance, for 64 users, Step 1 to Step 4 are performed twice: once for the third layer and once for the second layer, and then Step 5 to Step 8 are performed for the first layer. It will be appreciated that splitting the tree in more parts can permit greater memory space savings.

*Ica* Implementation Trick

This section describes two algorithms that compute the *lca* of two leafs in a tree. The node numbering of the tree is such as $n_l = i$; meaning that the root node is 1, the direct left child node is 2, the right child node 3, and so on. For a tree of height 32 (which is the case for AACS and for most applications based on binary trees), each leaf number can be then represented by a 32-bit integer in the range $\{2^{31}, 2^{32}1\}$.

The first algorithm runs in constant time and requires only *13* arithmetic operations.

**Algorithm 1**

| Input | unsigned int $r_A$ |
|---|---|
| | unsigned int $r_B$ |
| | unsigned int $r$ (temporary variable) |
| **Output** | $r$ |

$$r \leftarrow r_A \text{ XOR } r_B ;$$

$$r \leftarrow r \text{ OR ShiftRight } (r, 1) ;$$

$$r \leftarrow r \text{ OR ShiftRight } (r, 2) ;$$

$$r \leftarrow r \text{ OR ShiftRight } (r, 4) ;$$

$$r \leftarrow r \text{ OR ShiftRight } (r, 8) \, ;$$

$$r \leftarrow r \text{ OR ShiftRight } (r, 16) \, ;$$

$$r \leftarrow r + 1 \, ;$$

$$r \leftarrow r_A \div r \, ;$$

The input and output of the algorithms are 32-bit variables.

The second algorithm is faster (by 4 operations) if the *bit scan reverse* (BSR) operation is available. This instruction is for instance available on many architectures and particularly on Intel x86 used by ordinary PCs (see Intel 64 and IA-32 Architectures, Software Developer's Manual. Volume 2A: Instruction Set Reference, A-M, Order Number: 253666).

**Algorithm 2**

| Input | unsigned int $r_A$ |
| | unsigned int $r_B$ |
| | unsigned int $r$ (temporary variable) |
| **Output** | $r$ |

$$r \leftarrow r_A \text{ XOR } r_B \, ;$$

$$r \leftarrow \text{BSR } (r) \, ;$$

$$r \leftarrow r + 1 \, ;$$

$$r \leftarrow \text{ShiftRight } (r_A, r) \, ;$$

Figure 4 illustrates an exemplary computing device 400 on which the algorithms of the present invention may be implemented. The computing device 400 can be any kind of suitable computer or device capable of performing calculations, such as a standard Personal Computer (PC) or workstation. The computing device 400 preferably comprises at least one processor 410, RAM memory 420, a user interface 430 for interacting with a user, and a second interface 440 for interaction with other devices over connection 450. The computing device 400 also preferably comprises an interface for reading a software program from a digital data support 460 that stores instructions that, when executed by a processor, performs any of the algorithms of the present invention. The skilled person will appreciate that the illustrated devices are very simplified for reasons of clarity and that real devices in addition would comprise features such as persistent storage devices.

It will be appreciated that the tree need not be binary, but also ternary, quaternary etc. It will also be appreciated that the revoked leaves need not be treated in any particular order, but that it is more efficient to treat them in an ordered manner, such as from 'left to right'.

The SD system was designed to cope with a relatively small number of revoked users in practice. For the scheme to be efficient in terms of transmission overhead, revoked users should not exceed 1% of the total number of users. In AACS, a tree of height 32 and revocation can in practice reach up to 100 000 users. In this case, finding the cover of all privileged users with the algorithm proposed by Nakamura and Kikuchi, would require 12 Mbytes of memory.

The algorithm of the first preferred embodiment of the present invention can permit a saving of half of the memory. With the algorithm of the second preferred embodiment of the present invention, a further saving can be achieved and only 4 Mbytes of memory would be needed. In term of computation cost, the two algorithms presented herein have a run time of about $O(r.\log(r).\log(n))$ basic operations.

The skilled person will appreciate that there are other systems where the key computation for authorized users occur more often than for AACS.

The basic solutions would face a problem if for instance several thousands of licenses are requested at a time. The algorithms of the present invention can be more efficient, dealing with changes in the group of authorized users, and providing the desired level of security without trading away performance in terms of computation cost. The memory space can be drastically reduced while the number of operations remains the same.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. A method of indexation of a plurality of nodes within a tree comprising nodes belonging to a group of nodes, the method comprising the steps in a processor (410) of:

   A) selecting a first node and a second node among the group of nodes;
   B) calculating a common ancestor node for the first node and the second node, the common ancestor node and its hierarchically superior nodes each having an indexing set;
   C) adding the first node to the indexing set of the common ancestor node and the indexing sets of nodes hierarchically superior to the common ancestor node, wherein the first node is added to an indexing set only if it is not already present therein;
   D) adding the second node to the indexing set of the common ancestor node and the indexing sets of nodes hierarchically superior to the common ancestor node;
   E) if the number of nodes in one or more indexing sets became two when the first node or the second node was added, adding the nodes corresponding to these indexing sets to a selection set; and
   F) while at least one node in the group of nodes has not been selected as the first node or the second node, repeat steps B)-F) with the second node of the previous iteration set as the first node, and the second node of the current iteration selected as a node in the group of nodes that has not already been selected as the second node.

2. The method of claim 1, wherein the tree is a binary tree.

3. The method of claim 1, wherein the set of nodes is an ordered set of nodes and wherein the order is from one end of the tree to the other.

4. The method of claim 3, wherein the nodes that belong to the ordered set are leaves in the tree.

5. The method of claim 1, wherein the common ancestor node is the least common ancestor node.

6. The method of claim 1, wherein the tree is split into a plurality of hierarchic layers and wherein the node is only added to the indexing sets of nodes in the same hierarchical layer, and wherein the next node is only added to the indexing sets of nodes in the same hierarchical layer.

7. The method of claim 1, further comprising the subsequent steps of using the indexing sets and the selection set in a Subset Difference cover finding algorithm.

8. The method of claim 1, wherein, during execution of step E), only the hierarchically lowest node corresponding to the indexing sets for which the nodes became two is added to the selection set.

9. An apparatus (400) for indexation of a plurality of nodes within a tree comprising nodes belonging to a group of nodes, the apparatus (400) comprising a processor (410) programmed to iteratively:

select a first node and a second node among the group of nodes;
calculate a common ancestor node for the first node and the second node, the common ancestor node and its hierarchically superior nodes each having an indexing set;
add the first node to the indexing sets of the common ancestor node and the indexing sets of nodes hierarchically superior to the common ancestor node, wherein the first node is added to an indexing set only if it is not already present therein;
add the second node to the indexing sets of the common ancestor node and the indexing sets of nodes hierarchically superior to the common ancestor node; and
if the number of nodes in one or more indexing sets became two when the node or the second node was added, add the nodes corresponding to these indexing sets to a selection set.

10. The apparatus of claim 9, wherein the tree is split into a plurality of hierarchic layers and wherein the processor (410) is further programmed to add the node only to the indexing sets of nodes of the same hierarchical layer, and to add the next node only to the indexing sets of nodes of the same hierarchical layer.

11. The apparatus of claim 9, wherein the processor (410) is further programmed to use the indexing sets and the selection set in a Subset Difference cover finding algorithm.

12. A computer program product (460) storing thereon instructions that, when executed on a processor, performs the method of any one of claims 1-8.

Figure 1

Figure 2

Figure 3

Figure 4

Europäisches
Patentamt

European
Patent Office

Office européen
des brevets

## PARTIAL EUROPEAN SEARCH REPORT

Application Number

under Rule 62a and/or 63 of the European Patent Convention.
This report shall be considered, for the purposes of
subsequent proceedings, as the European search report

EP 10 30 5735

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | NAKAMURA Y ET AL: "Efficient Key Management Based on the Subset Difference Method for Secure Group Communication", ADVANCED INFORMATION NETWORKING AND APPLICATIONS, 2005. AINA 2005. 19T H INTERNATIONAL CONFERENCE ON TAIPEI, TAIWAN 25-30 MARCH 2005, PISCATAWAY, NJ, USA,IEEE, vol. 1, 25 March 2005 (2005-03-25), pages 707-712, XP010789873, DOI: DOI:10.1109/AINA.2005.172 ISBN: 978-0-7695-2249-4 * the whole document * ----- -/-- | 1-12 | INV. H04L9/08 |

TECHNICAL FIELDS
SEARCHED      (IPC)

H04L

### INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 4 February 2011 | Di Felice, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

\.............................................................................
& : member of the same patent family, corresponding
document

EPO FORM 1503 03.82 (P04E07)

Europäisches
Patentamt

European
Patent Office

Office européen
des brevets

## PARTIAL EUROPEAN SEARCH REPORT

**Application Number**

EP 10 30 5735

| DOCUMENTS CONSIDERED TO BE RELEVANT | | | CLASSIFICATION OF THE APPLICATION (IPC) |
|---|---|---|---|
| Category | Citation of document with indication, where appropriate, of relevant passages | Relevant to claim | |
| X,D | DALIT NAOR ET AL: "Revocation and Tracing Schemes for Stateless Receivers", [Online] 23 August 2001 (2001-08-23), ADVANCES IN CRYPTOLOGY. CRYPTO 2001. 21ST ANNUAL INTERNATIONAL CRYPTOLOGY CONFERENCE, SANTA BARBARA, CA, AUG. 19 - 23, 2001. PROCEEDINGS; [LECTURE NOTES IN COMPUTER SCIENCE ; VOL. 2139], PAGE(S) 1 - 33, XP002491877, ISBN: 978-3-540-42456-7 Retrieved from the Internet: URL:http://www.iacr.org/archive/crypto2001 /21390040.pdf> [retrieved on 2008-08-12] * the whole document * ----- | 1-12 | |
| X | HUANG S C-H ET AL: "New constructions on broadcast encryption and key pre-distribution schemes", INFOCOM 2005. 24TH ANNUAL JOINT CONFERENCE OF THE IEEE COMPUTER AND CO MMUNICATIONS SOCIETIES. PROCEEDINGS IEEE MIAMI, FL, USA 13-17 MARCH 2005, PISCATAWAY, NJ, USA,IEEE, PISCATAWAY, NJ, USA, vol. 1, 13 March 2005 (2005-03-13), pages 515-523, XP010829153, DOI: DOI:10.1109/INFCOM.2005.1497919 ISBN: 978-0-7803-8968-7 * the whole document * ----- | 1-12 | **TECHNICAL FIELDS SEARCHED (IPC)** |

EPO FORM 1503 03.82 (P04C10)

Europäisches
Patentamt

European
Patent Office

Office européen
des brevets

**INCOMPLETE SEARCH**
**SHEET C**

Application Number

EP 10 30 5735

Claim(s) completely searchable:
-

Claim(s) searched incompletely:
1-12

Reason for the limitation of the search (non-patentable invention(s)):

Independent claims 1, 9 and 12 are respectively directed at a method, an apparatus and a computer programme product, and define a mathematical method of indexing a plurality of nodes within a tree, which is run in a processor. No solution of a technical problem, nor a technical effect going beyond the fact itself that the mathematical method is being run in a processor, are apparent from the wording of the claims. The claims are therefore considered to be only partially searchable and their subject-matter to be for the most part unpatentable according to Article 52(2)(a) and (c), the only technical feature defined in the claims being a processor.

Dependent claims 1 to 8, 10 and 11 do not add any technical features to the claimed subject-matter and are therefore also considered to be only partially searchable, for the reasons stated above.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Advanced Access Content System Introduction and Common Cryptographic Elements. 17 February 2006, vol. 91
- **D. NAOR ; M. NAOR ; J. LOTSPIECH.** Revocation and Tracing Schemes for Stateless Receivers. *Proceedings of Crypto'01, volume 2139 of Lecture Notes in Computer Science,* 2001, vol. 2139, 41-62
- **Y. NAKAMURA ; H. KIKUCHI.** Efficient Key Management Based on the Subset Difference Method for Secure Group Communication. *International Conference on Advanced Information Networking and Applications (AINA'05,* 2005, vol. 1, 707-712
- Intel 64 and IA-32 Architectures. Software Developer's Manual. Volume 2A: Instruction Set Reference, A-M, Order Number: 253666. vol. 2A